# FASCICULE DE BREVET EUROPEEN

(11) **EP 0 815 785 B1**
(45) Date de publication et mention de la délivrance du brevet: **24.05.2000**
(21) Numéro de dépôt: 97401334.4
(22) Date de dépôt: 13.06.1997
(51) Int. Cl.: A47J 37/12

(54) **Couvercle d'appareil de cuisson**
Deckel für ein Kochgefäss
Lid for a cooking vessel

(30) Priorité: 27.06.1996 FR 9607984
(43) Date de publication de la demande: 07.01.1998
(73) Titulaire: MOULINEX S.A., 75008 Paris (FR)
(72) Inventeur: Bois, Bernard, Marcel, La Folie Couvrechef, 14000 Caen (FR); Collas, Guy, 14123 Ifs (FR)
(74) Mandataire: Busquets, Jean-Pierre

(56) Documents cités:
- EP-A- 0 726 055
- FR-A- 2 186 210
- FR-A- 2 239 224
- FR-A- 2 649 440
- FR-A- 2 680 312
- GB-A- 1 146 350
- GB-A- 2 281 939

## Description

La présente invention se rapporte à un couvercle d'appareil de cuisson monté articulé sur un boîtier de réception d'une cuve de cuisson au moyen d'au moins une charnière dont une partie mobile est reliée au couvercle et dont une partie fixe est implantée sur le boîtier, ainsi que décrit dans le brevet GB 2 281 939, et comportant un habillage externe réalisé en un matériau plastique et un contre-couvercle métallique fixé à distance de l'habillage et portant un joint d'étanchéité destiné à venir reposer sur le bord supérieur de la cuve lorsque le couvercle est amené en sa position de fermeture. Un tel couvercle selon le préambule de la revendication 1, est par exemple décrit dans les brevets français 2 239 224 et 2 615 274.

Ce type de couvercle, pour des raisons esthétique et économique, comporte généralement une charnière, par exemple, du type décrit dans le brevet français 2649440 dans laquelle une partie fixe est solidaire du boîtier tandis qu'une partie mobile est directement lié à l'habillage externe, ou, par exemple, du type décrit dans le brevet français 2680312 et dans laquelle des pivots sont solidaires du couvercle et des paliers sont solidaires du boîtier.

Dans ces trois exemples de réalisation, l'habillage externe est réalisé en un matériau plastique moulé dont les cotes peuvent légèrement variées lors des opérations de moulage et d'assemblage, ou bien lors des nombreux cycles thermiques de cuisson. Ainsi, il risque de se produire des défauts de centrage entre le bord supérieur de la cuve et le joint provoquant donc des fuites de vapeur chaude.

D'autre part, bien souvent le couvercle comporte à l'opposé de l'articulation un dispositif de verrouillage-déverrouillage qui exige un positionnement correct des pièces entre elles de manière à être efficace aussi bien lorsque l'appareil de cuisson est en position de rangement, que lorsque l'appareil est en fonctionnement.

L'invention a notamment pour but de supprimer les inconvénients exposés ci-dessus.

Selon l'invention, le contre-couvercle est fixé directement à la partie mobile de la charnière tel que décrit dans la partie caractérisante de la revendication 1.

Grâce à cette construction, les défauts de moulage de l'habillage et les éventuels gauchissements dus à la dilatation de cet habillage n'ont aucune influence sur le fonctionnement de l'appareil de cuisson, le contre-couvercle assurant par sa rigidité intrinsèque une bonne étanchéité entre cuve et couvercle, ainsi qu'un verrouillage correct du couvercle sur le boîtier lorsque l'appareil est équipé d'un tel dispositif de fermeture.

Selon une autre caractéristique importante de l'invention, le joint d'étanchéité est fixé hors de la bordure du contre-couvercle.

On souligne que cette fixation permet notamment de s'affranchir des contraintes relatives au parcours du joint d'étanchéité plus particulièrement sur certains tronçons du parcours qui dans l'art antérieur venaient chevaucher ou contourner les implantations de la charnière et/ou du dispositif de verrouillage. D'autre part, on comprend que l'opération de pose du joint hors du bord périphérique du contre-couvercle qui est relativement coupant, s'effectue avec facilité et sans danger pour le personnel employé à l'assemblage du couvercle. En outre, le joint fixé hors de la bordure ne risque pas d'être entaillé par ce bord coupant et peut présenter une forme très simple pour sa fixation.

Les caractéristiques et avantages de l'invention ressortiront d'ailleurs de la description qui va suivre, à titre d'exemple non limitatif, en référence aux dessins annexés dans lesquels :
- la figure 1 est une vue en coupe verticale d'un appareil de cuisson comportant un couvercle selon l'invention équipé d'un contre-couvercle muni d'un joint d'étanchéité ;
- la figure 2 est une vue en coupe horizontale du couvercle seul selon la ligne II-II de la figure 1 ;
- la figure 3 est une vue en section verticale selon la ligne III-III de la figure 2 ;
- la figure 4 est une vue en section verticale selon la ligne IV-IV de la figure 2, et
- la figure 5 est une vue en section verticale d'une partie d'un contre-couvercle et d'un joint d'une variante de réalisation selon l'invention.

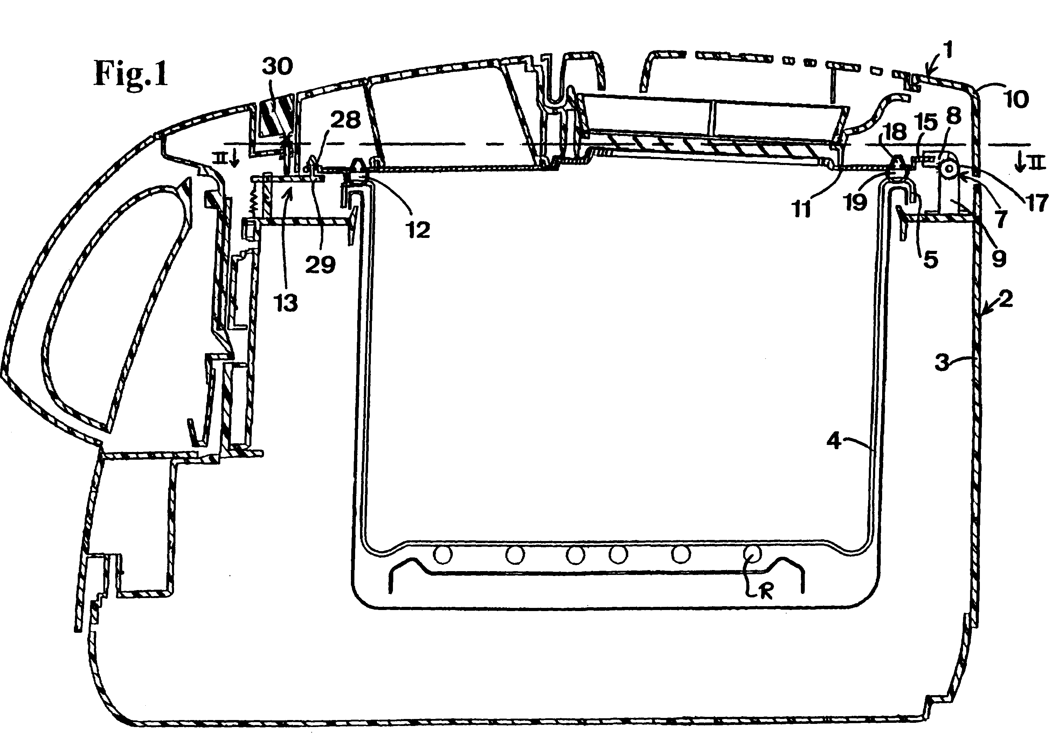

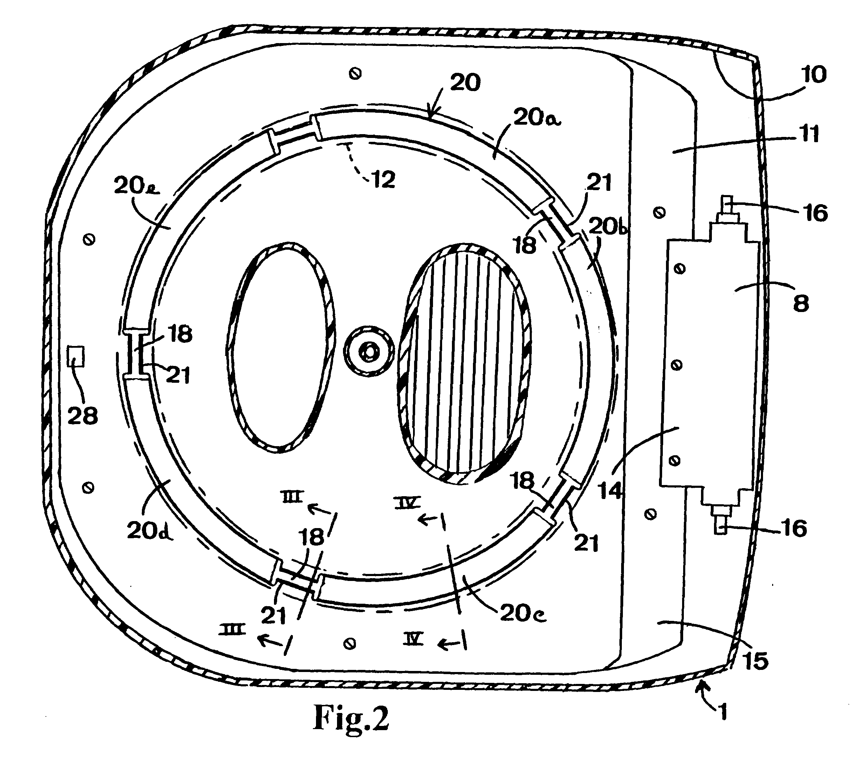

Dans l'exemple de réalisation préférentielle illustrée notamment figures 1 et 2, le couvercle 1 est monté sur un appareil de cuisson 2 tel qu'une friteuse comprenant un boîtier 3 réalisé en une matière plastique telle que, par exemple un polypropylène, et recevant une cuve de cuisson 4 présentant un bord supérieur roulé 5. La cuve 4 est chauffée par une résistance électrique R.

Le couvercle 1 est monté articulé au moyen d'au moins une charnière référencée dans son ensemble par 7, dont une partie mobile 8 est reliée au couvercle et dont une partie fixe 9 est implantée sur le boîtier. Comme on le comprendra, l'articulation pourrait être constituée de deux charnières distantes l'une de l'autre.

Comme illustré sur la figure 1, le couvercle 1 comporte un habillage externe 10 en forme générale de chapeau et réalisé en un matériau plastique tel que par exemple un polypropylène, ainsi qu'un contre-couvercle métallique 11 sensiblement plat, situé à distance de l'habillage 10 et portant un joint d'étanchéité 12 destiné à venir reposer sur le bord supérieur 5 de la cuve 4 lorsque le couvercle est amené en sa position de fermeture.

Dans l'exemple de réalisation illustrée, le couvercle 5 est équipé d'un dispositif de verrouillage/déverrouillage 13 destiné à maintenir le couvercle bien fermé et donc le joint d'étanchéité 12 appliqué sur le bord supérieur roulé 5 de la cuve 4.

Pour obtenir notamment une telle étanchéité, l'invention prévoit que le contre-couvercle 11 est fixé directement à la partie mobile 8 de la charnière 7.

Comme le montre plus particulièrement la figure 2, la partie mobile 8 est constituée par une pièce moulée comportant un corps 14 rigidement fixé par exemple par des vis sur une partie de la bordure périphérique 15 du contre-couvercle 11 et portant en chacune de ses extrémités un tenon 16 de pivotement destiné à venir tourillonner dans un palier correspondant 17 porté par la partie fixe 9 de la charnière 7. Selon une caractéristique avantageuse de l'invention, le joint d'étanchéité 12 est fixé hors de la bordure 15 du contre-couvercle 11.

Grâce à cette disposition particulière, on laisse libre la bordure du contre-couvercle 11 de manière à permettre toutes les opérations de fixation mécanique de la partie mobile 8 de la charnière, et d'une partie du dispositif de verrouillage/déverrouillage 13 comme expliqué plus loin.

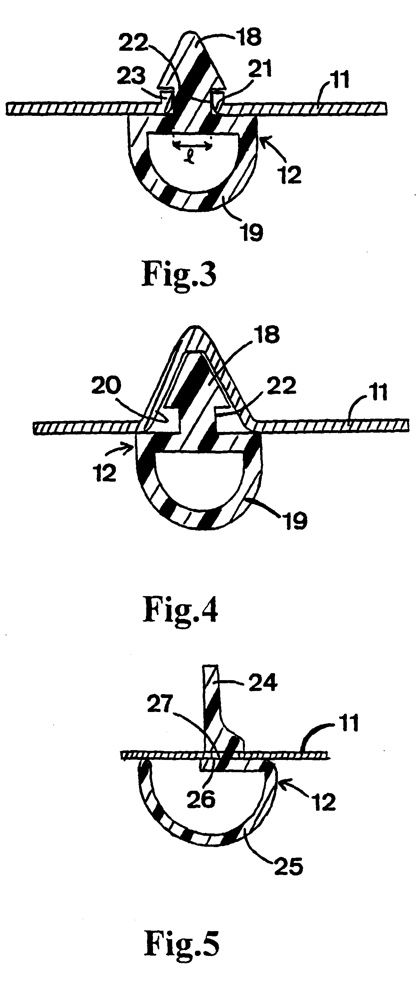

Selon une autre caractéristique importante de l'invention, et comme représenté aux figures 3 et 4, le joint d'étanchéité 12 est un profilé extrudé en matériau élastique, caoutchouc ou silicone, comportant un pied 18 qui vient se fixer sur le contre-couvercle 11 et un corps 19 destiné à assurer l'étanchéité et s'étendant sur la face interne du contre-couvercle selon une boucle fermée (illustrée en traits interrompus sur la figure 2) de forme complémentaire à celle du bord supérieur 5 de la cuve 4. Préférentiellement, le contre-couvercle 11 présente un logement de réception du pied 18, ainsi que des moyens de retenue du joint 12 dans ce logement. A cette fin, le logement comporte une gorge 20 pratiquée par emboutissage dans la paroi du contre-couvercle 11 et entrecoupée de crevés oblongs 21 formant ainsi plusieurs tronçons de gorge 20a à 20e, tandis que le pied 18 présente un rétrécissement longitudinal 22 ménagé dans la région mitoyenne au corps 19, et d'une largeur 1 sensiblement égale à la largeur d'un crevé, ledit rétrécissement 22 et lesdits crevés 21 constituant ensemble les moyens de retenue du joint 12 dans la gorge 20 du contre-couvercle 11. Dans un type de réalisation préféré, le pied 18 présente la forme générale d'un champignon conférant ainsi une meilleure insertion du pied au travers des crevés 21, ainsi qu'un bon positionnement de ce dernier dans les tronçons de gorge 20a à 20e.

De manière à garantir une bonne application du joint 12 contre la paroi du contre-couvercle 11 et de ne pas blesser le joint par le bord découpé des crevés 21, ces derniers présentent un léger rebord 23 dont la hauteur est sensiblement égale à la hauteur du rétrécissement 22.

Selon un autre mode de réalisation illustré à la figure 4 et dans laquelle on a gardé les mêmes références pour désigner des pièces semblables, le joint d'étanchéité 12 est une pièce moulée en matériau élastique comportant une pluralité de pieds 24 destinés à être fixés sur le contre-couvercle 11 et un corps 25 destiné à assurer l'étanchéité et s'étendant selon une boucle fermée de forme complémentaire à celle du bord supérieur 5 de la cuve 4. Dans cette réalisation, le contre-couvercle 11 présente dans sa paroi une série de crevés 26 destinés à être traversés respectivement par les pieds 24, chaque pied 24 présentant également un rétrécissement 27 ménagé dans la région mitoyenne au corps 25 de forme complémentaire à celle d'un crevé et venant s'engager dans l'un des crevés 26. Ainsi, le corps 25 du joint est directement appliqué contre la face interne du contre-couvercle 11.

Grâce à l'invention, non seulement, on garantit le bon pivotement du couvercle sur le boîtier tout en assurant une parfaite étanchéité de la cuve de cuisson, mais aussi on garantit par la rigidité de l'ensemble contre-couvercle/charnière le bon fonctionnement du dispositif de verrouillage-déverrouillage 13 en permettant de réaliser directement dans la bordure 15 du contre-couvercle 11 un cran de retenue 28, présentement réalisé par le bord d'un trou, pour un crochet mobile 29 solidaire du boîtier 3 et actionnable commodément par un bouton de manoeuvre 30.

## Revendications

1. Couvercle (1) d'appareil de cuisson (2) monté articulé sur un boîtier (3) de réception d'une cuve de cuisson (4) au moyen d'au moins une charnière (7) dont une partie mobile (8) est reliée au couvercle et dont une partie fixe (9) est implantée sur le boîtier, et comportant un habillage externe (10) réalisé en un matériau plastique et un contre-couvercle métallique (11) fixé à distance de l'habillage et portant un joint d'étanchéité (12) destiné à venir reposer sur le bord supérieur (5) de la cuve de cuisson (4) lorsque le couvercle est amené en sa position de fermeture,
**caractérisé en ce que** le contre-couvercle (11) comportant une bordure périphérique (15) est fixé directement à la partie mobile (8) de la charnière (7)qui est constituée par une pièce moulée comportant un corps (14) rigidement fixé sur une partie de la bordure périphérique (15) et portant en chacune de ses extrémités un tenon (16) de pivotement destiné à venir tourillonner dans un palier correspondant (17) porté par la partie fixe (9) de la charnière (7).

2. Couvercle selon la revendication 1,
**caractérisé en ce que** le joint d'étanchéité (12) est fixé hors de la bordure (15) du contre-couvercle (11).

3. Couvercle selon la revendication 2,
**caractérisé en ce que** le joint d'étanchéité (12) est un profilé extrudé en matériau élastique comportant un pied (18) destiné à être fixé sur le contre-couvercle (11) et un corps (19) destiné à assurer l'étanchéité et s'étendant selon une boucle fermée de forme complémentaire à celle du bord supérieur (5) de la cuve (4).

4. Couvercle selon la revendication 3,
**caractérisé en ce** le contre-couvercle (11) présente dans sa paroi un logement de réception du pied (18) ainsi que des moyens de retenue du joint d'étanchéité (12) dans ledit logement.

5. Couvercle selon la revendication 4,
**caractérisé en ce** le logement comporte une gorge (20) pratiquée par emboutissage dans la paroi du contre-couvercle (11) et entrecoupée de crevés oblongs (21), tandis que le pied (18) du joint (12) présente un rétrécissement (22) longitudinal ménagé dans la région mitoyenne au corps (19), ledit rétrécissement (22) et lesdits crevés constituant ensemble les moyens de retenue du joint.

6. Couvercle selon la revendication 5,
**caractérisé en ce que** le rétrécissement (22) présente une largeur (1) sensiblement égale à la largeur des crevés (21).

7. Couvercle selon la revendication 2,
**caractérisé en ce que** le joint d'étanchéité (12) est une pièce moulée en matériau élastique comportant une pluralité de pieds (24) destinés à être fixés sur le contre-couvercle (11) et un corps (25) destiné à assurer l'étanchéité et s'étendant selon une boucle fermée de forme complémentaire à celle du bord supérieur (5) de la cuve (4).

8. Couvercle selon la revendications 7,
**caractérisé en ce que** le contre-couvercle (11) présente dans sa paroi une série de crevés (26) destinés à être traversés respectivement par les pieds (24) du joint (12), chaque pied présentant un rétrécissement (27) ménagé dans la région mitoyenne au corps (25), de forme complémentaire à celle d'un crevé et venant s'engager dans l'un des crevés.

9. Couvercle selon l'une quelconque des revendications précédentes,
**caractérisé en ce qu'**il est monté sur un boîtier (3) d'une cuve de friteuse.

10. Couvercle selon l'une quelconque des revendications précédentes,
**caractérisé en ce qu'**il est équipé d'un dispositif de verrouillage/déverrouillage (13) agencé à l'opposé de la charnière et comportant un crochet mobile (29) solidaire du boîtier (3) et un cran (28) de retenue pratiqué dans la bordure (15) du contre-couvercle (11).

## Claims

1. Lid (1) for a cooking appliance (2) mounted so as to be articulated on a casing (3) receiving a cooking vessel (4) by means of at least one hinge (7), a movable part (8) of which is connected to the lid and a fixed part (9) of which is located on the casing, and having an external cladding (10) produced from a plastic material and a metallic inner lid (11) fixed at a distance from the cladding and carrying a sealing joint (12) intended to come to rest on the top edge (5) of the cooking vessel (4) when the lid is brought into its closed position,
**characterised in that** the inner lid (11) with a peripheral rim (15) is fixed directly to the movable part (8) of the hinge (7) which consists of a moulded piece having a body (14) rigidly fixed to a part of the peripheral rim (15) and carrying at each of its ends a pivoting tenon (16) intended to be journalled in a corresponding bearing (17) carried by the fixed part (9) of the hinge (7).

2. Lid according to claim 1,
**characterised in that** the sealing joint (12) is fixed outside the rim (15) of the inner lid (11).

3. Lid according to claim 2,
**characterised in that** the sealing joint (12) is an extruded profile made of resilient material having a foot (18) intended to be fixed on the inner lid (11) and a body (19) intended to provide the seal and extending in a closed loop with a shape complementary to that of the top edge (5) of the vessel (4).

4. Lid according to claim 3,
**characterised in that** the inner lid (11) has, in its wall, a housing for receiving the foot (18) and means for retaining the sealing joint (12) in the housing.

5. Lid according to claim 4,
**characterised in that** the housing has a groove (20) formed by pressing in the wall of the inner lid (11) and divided by oblong cuts (21), whilst the foot (18) of the joint (12) has a longitudinal narrowing (22) provided in the region adjoining the body (19), the narrowing (22) and the cuts constituting together the means for retaining the joint.

6. Lid according to claim 5,
**characterised in that** the narrowing (22) has a width (1) substantially equal to the width of the cuts (21).

7. Lid according to claim 2,
**characterised in that** the sealing joint (12) is a piece moulded from resilient material having a plurality of feet (24) intended to be fixed to the inner lid (11) and a body (25) intended to provided the seal and extending in a closed loop with a shape complementary to that of the top edge (5) of the vessel (4).

8. Lid according to claim 7,
**characterised in that** the inner lid (11) has in its wall a series of cuts (26) intended to have the feet (24) of the joint (12) pass respectively through them, each foot having a narrowing (27) provided in the region adjoining the body (25), with a shape complementary to that of a cut and coming to engage in one of the cuts.

9. Lid according to any one of the preceding claims,
**characterised in that** it is mounted on a casing (3) of a deep-fryer vessel.

10. Lid according to any one of the preceding claims,
**characterised in that** it is equipped with a locking/unlocking device (13) arranged opposite to the hinge and having a movable hook (29) secured to the casing (3) and a retaining notch (28) formed in the rim (15) of the inner lid (11).

## Patentansprüche

1. Deckel (1) für ein Kochgefäß (2), der an ein eine Kochwanne (4) aufnehmendes Gehäuse (3) mit mindestens einem Scharnier (7) angelenkt ist, von dem ein beweglicher Teil (8) mit dem Deckel verbunden ist und ein fester Teil (9) im Gehäuse verankert ist, und der eine äußere Abdeckung (10) aus Kunststoffmaterial und einen metallischen Gegendeckel (11) aufweist, der beabstandet von der Abdeckung befestigt ist und eine Dichtung (12) trägt, die auf dem oberen Rand (5) der Kochwanne (4) ruht, wenn der Deckel in seine geschlossene Stellung gebracht ist, **dadurch gekennzeichnet, daß** der Gegendeckel (11), der einen Umfangsrand (15) aufweist, direkt am beweglichen Teil (8) des Scharniers (7) befestigt ist, der aus einem Formstück mit einem Körper (14) besteht, der starr an einem Teil des Umfangsrandes (15) befestigt ist und an jedem seiner Enden einen Drehzapfen (16) trägt, der sich in einem entsprechenden Lager (17) drehen kann, das von dem festen Teil (9) des Scharniers (7) getragen ist.

2. Deckel nach Anspruch 1, **dadurch gekennzeichnet, daß** die Dichtung (12) außerhalb des Randes (15) des Gegendeckels (11) befestigt ist.

3. Deckel nach Anspruch 2, **dadurch gekennzeichnet, daß** die Dichtung (12) ein extrudiertes Profil aus elastischem Material ist, mit einem Fuß (18), der am Gegendeckel (11) befestigt wird, und einem Körper (19), der die Dichtheit gewährleistet und sich gemäß einem geschlossenen Ring erstreckt, dessen Form komplementär zu der des oberen Randes (5) der Wanne (4) ist.

4. Deckel nach Anspruch 3, **dadurch gekennzeichnet, daß** der Gegendeckel (11) in seiner Wand einen Aufnahmesitz für den Fuß (18) sowie Halteelemente für die Dichtung (12) in dem Aufnahmesitz aufweist.

5. Deckel nach Anspruch 4, **dadurch gekennzeichnet, daß** der Aufnahmesitz eine Rinne (20) aufweist, die durch Tiefziehen in der Wand des Gegendeckels (11) gebildet und mit länglichen Schlitzen (21) versehen ist, während der Fuß (18) der Dichtung (12) eine längliche Verengung (22) aufweist, die im Grenzbereich zum Körper (19) ausgebildet ist, wobei die Verengung (22) und die Schlitze zusammen die Halteelemente der Dichtung bilden.

6. Deckel nach Anspruch 5, **dadurch gekennzeichnet, daß** die Verengung (22) eine Breite (1) aufweist, die im wesentlichen der Breite der Schlitze (21) entspricht.

7. Deckel nach Anspruch 2, **dadurch gekennzeichnet, daß** die Dichtung (12) ein Formstück aus einem elastischen Material ist mit einer Mehrzahl von Füßen (24) zur Befestigung am Gegendeckel (11) und mit einem Körper (25), der die Dichtheit gewährleistet und sich gemäß einem geschlossenen Ring erstreckt, dessen Form komplementär zu der des oberen Randes (5) der Wanne (4) ist.

8. Deckel nach Anspruch 7, **dadurch gekennzeichnet, daß** der Gegendeckel (11) in seiner Wand eine Reihe von Schlitzen (26) aufweist, die jeweils von den Füßen (24) der Dichtung (12) durchsetzt sind, wobei jeder Fuß eine im Grenzbereich zum Körper (25) ausgebildete Verengung (27) von komplementärer Form zu der eines Schlitzes aufweist, die in einen der Schlitze eingreift.

9. Deckel nach einem der vorangehenden Ansprüche, **dadurch gekennzeichnet, daß** er auf einem Gehäuse (3) der Wanne einer Friteuse montiert ist.

10. Deckel nach einem der vorangehenden Ansprüche, **dadurch gekennzeichnet, daß** er mit einer Verriegelungs-/Entriegelungsvorrichtung (13) ausgestattet ist, die entgegengesetzt zum Scharnier angeordnet ist und einen beweglichen Haken (29), der fest mit dem Gehäuse (3) verbunden ist, und eine Ausschnittsraste (28), die im Rand (15) des Gegendeckels (11) ausgebildet ist, aufweist.
